# EUROPÄISCHE PATENTSCHRIFT

(11) **EP 1 042 643 B1**
(45) Veröffentlichungstag und Bekanntmachung des Hinweises auf die Patenterteilung: **01.10.2003**
(21) Anmeldenummer: 98966219.2
(22) Anmeldetag: 21.12.1998
(51) Int. Cl.: G01B 11/275, G06T 7/00

(54) **VORRICHTUNG ZUM BESTIMMEN DER RAD- UND/ODER ACHSGEOMETRIE VON KRAFTFAHRZEUGEN**
DEVICE FOR DETERMINING THE WHEEL AND/OR AXLE GEOMETRY OF MOTOR VEHICLES
DISPOSITIF DE DETERMINATION DE LA GEOMETRIE DE ROUES ET/OU D'ESSIEUX DE VEHICULES A MOTEUR

(30) Priorität: 23.12.1997 DE 19757760
(43) Veröffentlichungstag der Anmeldung: 11.10.2000
(73) Patentinhaber: ROBERT BOSCH GMBH, 70442 Stuttgart (DE)
(72) Erfinder: NOBIS, Guenter, D-73240 Wendlingen (DE); UFFENKAMP, Volker, D-73430 Aalen (DE)
(86) Internationale Anmeldenummer: DE9803744
(87) Internationale Veröffentlichungsnummer: WO99034167

(56) Entgegenhaltungen:
- EP-A- 0 587 328
- EP-A- 0 803 703
- DE-C- 4 212 426
- US-A- 5 675 515

## Beschreibung

### Stand der Technik

Die Erfindung bezieht sich auf eine Vorrichtung zum Bestimmen der Radund/Oder Achsgeometrie von Kraftfahrzeugen in einem Meßraum mittels einer optischen Meßeinrichtung mit mindestens zwei Bildaufnahmeeinrichtungen, die aus zumindest zwei unterschiedlichen Perspektiven eine Markierungseinrichtung einschließlich mindestens eines an einem Rad vorhandenen oder angeordneten Radmerkmals erfaßt, und mit einer Auswerteeinrichtung.

Eine Vorrichtung dieser Art ist in der DE4212426 und in der US5675515 (von Wolfang Brunk) angegeben. Bei dieser bekannten Vorrichtung werden bei einem Fahrzeug zur Bestimmung von Spur- und Sturz charakteristische Bereiche der Räder mit Fernsehkameras aufgezeichnet. Das entsprechende Rad ist außerhalb seiner Achse mit einer optisch registrierbaren Markierung versehen, die während der Drehung des Rades mit zwei synchronisierten Fernsehkameras erfaßt wird. Während der Drehung des Rades steht das Fahrzeug auf Rollen. Aus den Raumlagen der Markierungen auf den Rädern werden die Relativstellungen der zugehörigen Achsen ermittelt. Die Fernsehkameras sind symmetrisch zur Achse des entsprechenden Rades angeordnet, wobei das Fahrzeug auf Rollen steht und die Räder sich in Rollenprismen drehen. Mit diesem System sind die Meßmöglichkeiten von Rad- bzw. Achsgeometrien auf Spur- und Sturzmessung eingeschränkt, und eine Justage der Achsgeometrie erfordert einen nicht geringen Aufwand.

Der Erfindung liegt die Aufgabe zugrunde, eine Vorrichtung der eingangs angegebenen Art bereitzustellen, mit der bei vereinfachter Bedienung mehr Aussagen zur Rad- bzw. Achsgeometrie erhalten werden. Eine Justage der Bildaufahmeeinrichtung ist nicht erforderlich.

Diese Aufgabe wird mit den Merkmalen des Anspruches 1 gelöst.

Aus den Fahrzeugbewegungskoordinaten ist auch eine Lenkbewegung während der Messung erkennbar. Es kann dann unterschieden werden, ob eine Korrektur z.B. bei entsprechend großem Lenkradius bei der Auswertung korrigierbar oder bei unstetigen Lenkbewegungen nicht korrigierbar ist und eine Wiederholungsmessung zu fordern ist.

Mittels des zumindest einen Radmerkmals, des zumindest einen Karosseriemerkmals und der Bezugsmerkmalsanordnung können mittels der Auswerteeinrichtung die Positionierung der Bildaufnahmeeinrichtungen genau ermittelt und die Radebene relativ zu den Fahrzeugbewegungskoordinaten errechnet werden, so daß die Rad- und Achsgeometrien bestimmbar sind. Dabei erfolgt die Bestimmung der Rad- bzw. Achsgeometrie unter realen Fahrbedingungen und nicht im Stand. Dadurch werden Verspannungen in den Radaufhängungen sowie Einflüsse, die vom Lagerspiel herrühren, grundsätzlich vermieden.

Auf eine exakte Nivellierung des Meßplatzes kann weitgehend verzichtet werden, da eine Abweichung von der Waagrechten nicht mehr direkt als Meßfehler eingeht. Die Anforderungen an die Ebenheit und Nivellierung des Meßplatzes können auf das vom Fahrzeug her erforderliche Maß reduziert werden. Die Messung kann bei geringem Vorbereitungsaufwand am Fahrzeug äußerst schnell durchgeführt werden. Die bisher bei manchen Systemen erforderliche Justage einer Meßeinrichtung am Rad entfällt, und die Gerätebedienung ist einfach.

Die Meßwerterfassung selbst geschieht in Sekundenbruchteilen, wobei für alle Meßgrößen eine hohe Genauigkeit und gleichzeitig gegenüber bisherigen Anordnungen ein vergrößerter Meßbereich gegeben ist. Die Angabe der Geometriedaten ist nicht auf Winkeleinheiten beschränkt, diese können auch als absolute Längeneinheiten angegeben werden. Mit der gleichen Vorrichtung und dem gleichen Verfahren können auf einem weiteren Meßplatz, der auf die Abmessungen von Nutzfahrzeugen ausgelegt ist, die Rad- und Achsgeometriedaten von Nutzfahrzeugen ermittelt werden. Dafür ist keine andere Prüftechnik erforderlich.

Mit der Vorrichtung können die Fahrachse und weiterhin folgende Rad- und Achsgeometriedaten rechnerisch ermittelt werden: Einzelspur für jedes Rad, Gesamtspur für jedes Radpaar, Sturz für jedes Rad, Radversatz vorn/hinten, Seitenversatz rechts/links, Spurweitendifferenz und Spurweite sowie Achsversatz.

Mit den oder zusätzlichen Karosseriemerkmalen an definierten Punkten im Bereich des Radausschnittes können zusätzlich der Einfederungszustand bzw. Beladungszustand je Rad und/oder die Neigung der Karosserie in Längs- und Querrichtung erfaßt werden. Damit ist es möglich, Abweichungen von einer vorgegebenen Gleichmäßigkeit des Beladungszustandes schnell zu erkennen und, falls erforderlich, durch entsprechende Zu-/Entladung zu korrigieren oder in fahrzeugspezifischen Korrekturrechnungen zu berücksichtigen.

Ein einfacher Aufbau mit zuverlässig erfaßbaren Bezugsmerkmalen wird dadurch erzielt, daß die Bezugsmerkmalsanordnung eine Trägereinheit aufweist, deren Anordnung im Meßraum frei gestaltbar ist und an der die Bezugsmerkmale in Form von Bezugsstrukturen oder speziell angebrachten Bezugsmerkmalen vorgesehen sind. Dadurch wird die Zuverlässigkeit der Meßergebnisse unterstützt.

Sind die Bezugsmerkmale zusätzlich zu einer ebenen, flächenhaften Anordnung bezüglich der Bildungsaufnahmeeinrichtung auch räumlich versetzt angeordnet, so ist die Auswertung bei hoher Zuverlässigkeit der Meßergebnisse gegenüber einer ebenen Anordnung der Bezugsmerkmale vereinfacht.

Für eine zuverlässige Erfassung der Markierungsmerkmale sind weiterhin die Maßnahmen vorteilhaft, daß die Bezugsmerkmale und/oder die Radmerkmale und/oder die Karosseriemerkmale als retroreflektierende Marken ausgebildet sind, und daß die Bildaufnahmeeinrichtung eine Kamera ist.

Ein kostengünstiger Aufbau der Vorrichtung ergibt sich dadurch, daß nur eine Meßeinheit mit mindestens zwei Bildaufnahmeeinrichtungen vorgesehen ist, und daß die Rad- und Achsgeometriedaten beim Vorbeifahren zunächst für die eine Fahrzeugseite und danach für die andere Fahrzeugseite beim nochmaligen Vorbeifahren von der anderen Seite bestimmbar sind.

Erweiterte Meßmöglichkeiten gegenüber einer nur einseitigen Anordnung einer Meßeinheit werden dadurch erzielt, daß mit nur einer Meßeinheit aus nur einer Position zumindest drei Bezugsmerkmale je Fahrzeugseite, die Radmerkmale der Räder zumindest einer Fahrzeugachse und mindestens ein Karosseriemerkmal gleichzeitig und zumindest im Verlauf der Vorbeifahrt die Radmerkmale der Räder aller Fahrzeugachsen und das (die) zugeordnete(n) Karosseriemerkmal(e) zumindest sequentiell oder gleichzeitig erfaßt werden oder daß zum Bestimmen der Rad- und Achsgeometrie auf beiden Seiten des Fahrzeugs bei einmaligem Vorbeifahren auf beiden Seiten des Meßplatzes eine Meßeinheit mit mindestens zwei Bildaufnahmeeinrichtungen vorgesehen ist. Bei diesem Aufbau der Vorrichtung können zusätzlich der Radversatz, der Seitenversatz, der Spurweitenversatz und der Achsversatz neben der Spur für jedes Rad, der Gesamtspur und dem Sturz für jedes Rad in der Auswerteeinrichtung bestimmt werden.

Zur Erhöhung der Meßempfindlichkeit kann vorgesehen sein, daß eine Meßeinheit mindestens drei Bildaufnahmeeinrichtungen umfaßt.

Mit der Maßnahme, daß zur Beleuchtung der Bezugsmerkmale, der Radmerkmale und der Karosseriemerkmale mindestens eine Lichtquelle eingesetzt wird, wird die Erfaßbarkeit der Radmerkmale, der Karosseriemerkmale und der Bezugsmerkmale weiterhin begünstigt. Mindestens eine Lichtquelle in der Nähe des Objektivs der Bildaufnahmeeinrichtung(en) begünstigt die Erfaßbarkeit retroreflektiver Meß- und Bezugsmerkmale. Ist dabei vorgesehen, daß die Lichtquellen Licht außerhalb des visuell wahrnehmbaren Spektrums aussenden, z.B. Infrarot-Leuchtdioden sind, so wird eine Beeinträchtigung der Lichtverhältnisse für die Gerätebediener am Meßort vermieden.

Die Radmerkmale, die Räder mehrere Fahrzeuge oder auch mehrere Meßplätze können automatisch dadurch unterschieden werden, daß mindestens ein Radmerkmal und/oder mindestens ein Karosseriemerkmal und/oder mindestens ein Bezugsmerkmal eine von der Bildaufnahmeeinrichtung erfaßbare Codierung trägt.

Durch Anbringen mehrerer Radmarken und Codieren mindestens einer dieser Radmarken je Rad ist es dabei insbesondere auch möglich, den Betrag eines Formfehlers einer Felge zu ermitteln und der entsprechenden Radmarke eindeutig zuzuordnen und gegebenenfalls bei den nachfolgenden Messungen bzw. Auswertungen zu berücksichtigen bzw. zu korrigieren.

Die Erfindung wird nachfolgend anhand eines Ausführungsbeispiels unter Bezugnahme auf die Zeichnungen näher erläutert. Es zeigen:
Fig. 1 eine Anordnung einer Vorrichtung zum Bestimmen der Rad- und Achsgeometrie aus einer Sicht in Fahrzeuglängsrichtung,
Fig. 2 eine Anordnung entsprechend Fig. 1 in seitlicher Ansicht und
Fig. 3 eine Anordnung gemäß den Fig. 1 und 2 in Draufsicht.

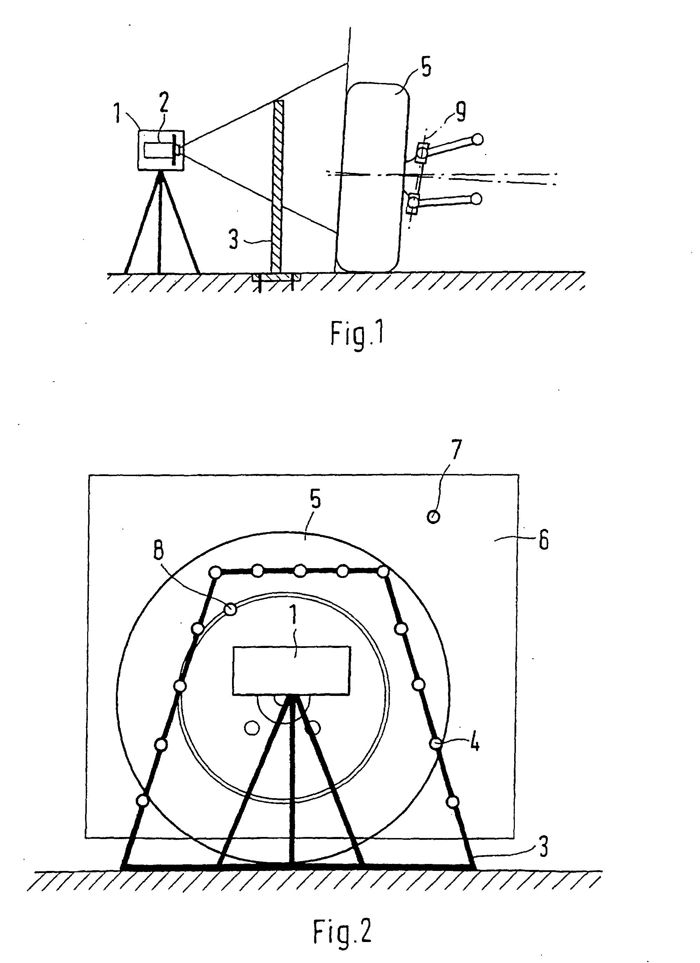

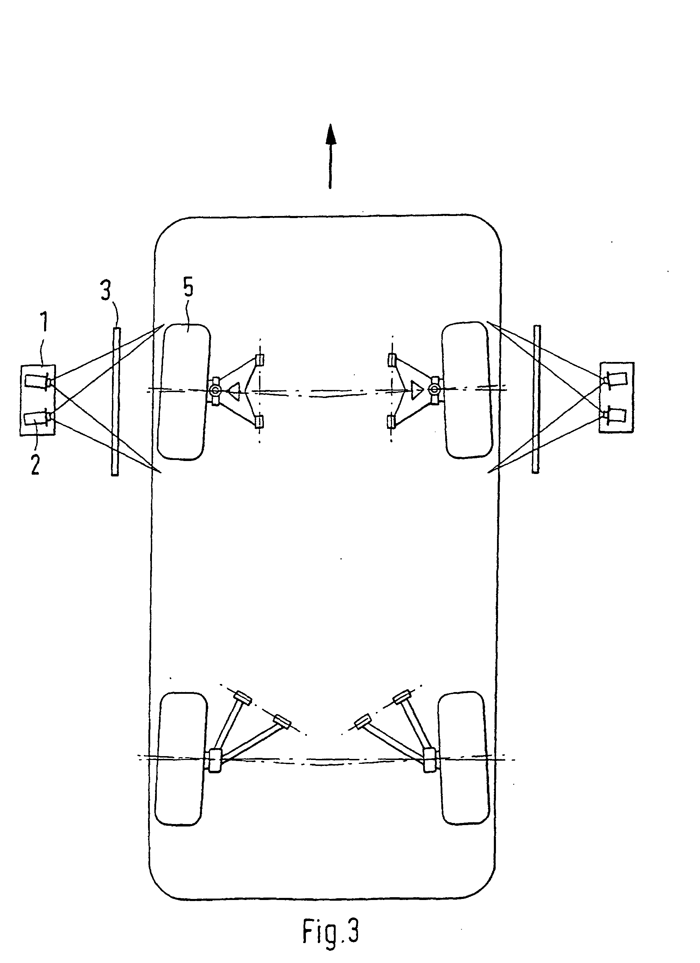

Fig. 1 und Fig. 3 zeigen eine Vorrichtung zum Bestimmen der Rad- und Achsgeometrie eines Fahrzeuges während der Fahrt mit seitlich von den Rädern 5 auf jeweils einem Stativ angeordneten Meßeinheiten 1 und zwischen diesen und den Rädern 5 angeordneten Bezugsmerkmalsanordnungen 3. Wie in Verbindung mit Fig. 3 ersichtlich, weist jede der Meßeinheiten 1 vorliegend zwei Bildaufnahmeeinrichtungen in Form von Kameras 2 auf, die einen Bildausschnitt 6 erfassen, in dem sowohl das Rad 5 als auch die Bezugsmerkmalsanordnung 3 zumindest teilweise als auch eine Karosseriemarke 7 gleichzeitig während einer Vorbeifahrt des Fahrzeugs liegen. Aus der seitlichen Darstellung gemäß Fig. 2 ist erkennbar, daß die Bezugsmerkmalsanordnung 3 einen trapezförmigen Rahmen mit mehreren Bezugsmarken 4 aufweist und daß an dem Felgenhorn des Rades 5 eine Meßmarke 8 und an der Karosserie zusätzlich mindestens eine Karosseriemarke 7 angeordnet ist. Die Bezugsmerkmalsanordnungen 3 umfassen jeweils mindestens drei Bezugsmarken 4 je Fahrzeugseite. Die Bezugsmarken 4 und die Radmarke 8 sowie die mindestens eine Karosseriemarke 7 sind retroreflektierend ausgebildet. Ferner ist eine Lenkdrehachse 9 angegeben.

Die beispielhaft kreisförmigen, optisch diffus reflektierenden Bezugsmarken 4, Radmarke 8 und Karosseriemarke 7 besitzen einen Durchmesser, der in Abhängigkeit von dem Abbildungsmaßstab des Kameraobjektives, der Größe des z.B. als CCD-Empfänger ausgebildeten Empfängerelementes der Kamera 2 und dem Objektabstand ausgewählt ist. Eine Justage der Radmarke 8 ist dabei nicht erforderlich. Die mindestens eine Karosseriemarke 7 an jeder Karosserieseite dient zur Erfassung der Bewegungsbahn des Fahrzeuges im Meßraum.

Je eine Meßeinheit in Form eines Meßkopfes 1 ist auf der linken und der rechten Seite des Meßplatzes positioniert. Die Meßköpfe 1 enthalten mindestens zwei Bildaufnahmeeinrichtungen in Form von Kameras 2, die aus unterschiedlichem Perspektiven und in einem ausreichend großen Abstand das Rad 5 mit der mindestens einen angebrachten Radmarke 8 und gleichzeitig zumindest eine Teilfläche der Karosserie mit der Karosseriemarke 7 sowie die Bezugsmerkmalsanordnung 3 bzw. einen Teil mit darin flächenhaft oder räumlich angeordneten Bezugsmarken 4 optisch in dem Bildausschnitt 6 erfassen können. Dabei ist es zum Erreichen einer hohen Meßgenauigkeit von Vorteil, die Marken von der jeweiligen Kamera 2 aus zu beleuchten. Dies kann relativ einfach mit um das Objektiv herum angeordneten Leuchtdioden LED's geschehen, die vorteilhafterweise Licht im Infrarotbereich bzw. im nahen Infrarot aussenden, wodurch eine Beeinträchtigung der Lichtverhältnisse für die Gerätebediener am Meßort vermieden wird.

Die Bezugsmerkmalsanordnung 3 besteht in der gezeigten Ausführungsform aus zwei trapezförmigen Gestellen mit den darauf befestigten Bezugsmarken 4. Die Gestelle sind rechts und links vom Meßplatz so im Boden verankert, daß ein Fahrzeug problemlos dazwischen hindurchfahren kann. Der Meßraum wird zwischen der Bezugsmerkmalsanordnung und der dazwischenliegenden Fahrbahnebene aufgespannt und die Raumkoordinaten der Bezugsmarken 4 sind durch vorherige Vermessung bekannt und in einer (nicht gezeigten) Auswerteeinrichtung gespeichert.

Nach dem Start der Messung fährt das zur Messung vorbereitete Fahrzeug durch den Meßplatz (zwischen den installierten Bezugsmerkmalsanordnungen 3 und den Meßköpfen 1) hindurch. Dabei werden mit an die Durchfahrtsgeschwindigkeitkeit angepaßter Belichtungszeit von beiden Meßköpfen 1 fortlaufend zeitsynchrone Bilder bei unterschiedlichen Fahrzeugpositionen und Radstellungen (bezüglich des Drehwinkels) aufgenommen. Aus den Positionen der in den verschiedenen Drehstellungen des Rades 5 erfaßten Bilder der mindestens einen Radmarke 8 kann eine Raddrehebene bestimmt werden.

Mit den zeitlich aufeinanderfolgenden Koordinaten der an der Karosserie befestigten Karosseriemarken 7 kann die Bewegungsbahn des Fahrzeugs relativ zu der Bezugsmerkmalsanordnung 3 bestimmt werden. Unter Hinzuziehen der zeitlich aufeinanderfolgenden Koordinaten der an den Rädern 5 befestigten Radmarken 8 können nun das Fahrzeugkoordinatensystem (z.B. Fahrzeuglängsachse/-ebene bzw. Fahrachse) und folgende Rad- und Achsgeometriedaten rechnerisch ermittelt werden: Spur für jedes Rad, Gesamtspur, Sturz für jedes Rad, Radversatz vorn/hinten, Seitenversatz rechts/links, Spurweitendifferenz und Achsversatz. Diese Geometriedaten liegen als Winkelgrößen vor, können aber auch in Längeneinheiten angegeben werden. In diese Angaben kann auch die Spurweite mit einbezogen werden.

Durch Anbringen der Karosseriemarken 7 oder auch weiterer Karosseriemarken an definierten Punkten im Bereich des Radausschnittes können zusätzlich der Einfederungszustand bzw. Beladungszustand je Rad und/oder die Neigung der Karosserie in Längs- und Querrichtung erfaßt werden. Damit ist es möglich, Abweichungen von einer vorgegebenen Gleichmäßigkeit des Beladungszustandes schnell zu erkennen und, falls erforderlich, durch entsprechende Zuladung zu korrigieren oder in fahrzeugspezifischen Korrekturrechnungen zu berücksichtigen.

Die mittels der beiden Meßeinheiten 1 zeitlich synchron aus unterschiedlichen Perspektiven und ausreichend großem Abstand erfaßten aufeinanderfolgenden Bilder während der Durchfahrt des Fahrzeuges durch den Meßplatz werden mit bekannten Verfahren der Bildverarbeitung ausgewertet, wobei die Bezugsmerkmale 4, die Karosseriemerkmale 7 sowie die Radmerkmale 8 identifiziert werden. Mit bekannten Methoden der Triangulation ist es möglich, die 3D-Koordinaten jedes Bezugsmerkmals 4, jedes Karosseriemerkmals 7 und jedes Radmerkmals 8 in Relation zu der Bezugsmerkmalsanordnung 3 und zur Meßzeit zu bestimmen. Mit diesen Koordinaten der aufeinanderfolgenden Bilder ist es nun mit bekannten Verfahren der Geometrie möglich, zum einen die Fahrachsenebene des Kraftfahrzeuges im Meßraum zu ermitteln und damit zusätzlich unzulässige Fahrtrichtungsänderungen (Lenkeinschläge) während der Vorbeifahrt zu detektieren, zur Anzeige zu bringen und/oder in der Auswertung der Rad- bzw. Achsgeometriedaten korrigierend zu berücksichtigen. Zum anderen ist es möglich, die Lage der Raddrehebenen relativ zu der jeweiligen Bezugsmerkmalsanordnung 3 und zur ermittelten Fahrebene zu bestimmen. Aus der relativen Lage der jeweiligen Radmerkmale 8 jedes Rades 5, des Karosseriemerkmals 7 bzw. der Karosseriemerkmale sowie den der Auswerteeinrichtung bekannten Lagen der Bezugsmerkmale 4 bzw. den ermittelten Lagen der Radebenen zum Fahrzeugkoordinatensystem werden nun die für eine Fahrwerksvermessung benötigten Geometriedaten bestimmt. Wenn mehrere Radmerkmale 8 pro Rad 5 angebracht sind, ist es möglich aus der Abweichung der Raddrehebenen zueinander einen eventuell vorhandenen Felgenschlag zu ermitteln.

Bei verhältnismäßig einfachem Aufbau der Vorrichtung und bei einfacher Bedienung können somit die Rad- und Achsgeometriedaten sowie weitere Größen während der Fahrt bestimmt werden. Dabei werden Verspannungen in den Radaufhängungen sowie Einflüsse, die vom Lagerspiel herrühren, grundsätzlich vermieden.

## Patentansprüche

1. Vorrichtung zum Bestimmen der Rad- und/oder Achsgeometrie von Kraftfahrzeugen mittels einer optischen Messeinrichtung mit mindestens zwei Bildaufnahmeeinrichtungen, die aus zumindest zwei unterschiedlichen Perspektiven eine Markierungseinrichtung einschließlich mindestens eines an jedem Rad (5) angeordneten Radmerkmals erfaßt, und mit einer Auswerteeinrichtung,
**dadurch gekennzeichnet,**
**dass** die Markierungseinrichtung (3,4, 7,8) weiterhin mindestens ein Karosseriemerkmal (7) und eine Bezugsmerkmalsanordnung (3) mit mindestens drei Bezugsmerkmalen (4) aufweist,
**dass** die räumliche Lage der Bezugsmerkmale (4) in der Auswerteeinrichtung bekannt ist,
**dass** die Bildaufnahmeeinrichtungen (2) Mittel zum Erfassen der Markierungseinrichtung (3,4, 7,8) während der Vorbeifahrt des Kraftfahrzeuges aufweisen, wobei das mindestens eine Radmerkmal (8) zur Bestimmung einer Radebene in mindestens drei unterschiedlichen Drehstellungen des Rades (5) und das mindestens eine Karosseriemerkmal (7) gleichzeitig zum Bestimmen der Fahrzeugbewegungskoordinaten erfassbar sind, und
**dass** die Auswerteeinrichtung zum Bestimmen zumindest der Rad- und/ oder Achsgeometrie aus der relativen Lage der Radebene zu den Fahrzeugbewegungskoordinaten ausgebildet ist.

2. Vorrichtung nach Anspruch 1,
**dadurch gekennzeichnet,**
**dass** die Bezugsmerkmalsanordnung (3) eine Trägereinheit aufweist, deren räumliche Anordnung frei gestaltbar ist und an der die Bezugsmerkmale in Form von Bezugsstrukturen oder speziell angebrachten Bezugsmerkmalen (4) vorgesehen sind.

3. Vorrichtung nach Anspruch 1 oder 2,
**dadurch gekennzeichnet,**
**dass** die Bezugsmerkmale (4) bezüglich der Bildaufnahmeposition räumlich versetzt angeordnet sind.

4. Vorrichtung nach einem der vorhergehenden Ansprüche,
**dadurch gekennzeichnet,**
**dass** die Bezugsmerkmale (4) und/oder die Radmerkmale (8) und/oder die Karosseriemerkmale (7) als retroreflektierende Marken ausgebildet sind, und
**dass** die Bildaufnahmeeinrichtung eine.Kamera (2) ist.

5. Vorrichtung nach einem der vorhergehenden Ansprüche,
**dadurch gekennzeichnet,**
**dass** eine Messeinheit (1) mit mindestens zwei Bildaufnahmeeinrichtungen (2) vorgesehen ist, die an nur einer Position zur gemeinsamen Erfassung aller Räder des Fahrzeugs angeordnet ist oder
**dass** die Rad- und Achsgeometriedaten zunächst für die eine Fahrzeugseite und danach für die andere Fahrzeugseite beim Vorbeifahren von der anderen Seite bestimmbar sind.

6. Vorrichtung nach einem der Ansprüche 1 bis 4,
**dadurch gekennzeichnet,**
**dass** zum Bestimmen der Rad- und Achsgeometrie auf beiden Seiten des Fahrzeugs bei einmaligem Vorbeifahren auf beiden Seiten des Meßplatzes eine Messeinheit (1) mit mindestens zwei Bildaufnahmeeinrichtungen (2) vorgesehen ist.

7. Vorrichtung nach einem der vorhergehenden Ansprüche,
**dadurch gekennzeichnet,**
**dass** eine Messeinheit (1) mindestens drei Bildaufnahmeeinrichtungen umfaßt.

8. Vorrichtung nach einem der vorhergehenden Ansprüche,
**dadurch gekennzeichnet,**
**dass** zur Beleuchtung der Bezugsmerkmale (4), der Radmerkmale (8) und der Karosseriemerkmale (7) eine oder mehrere Lichtquellen eingesetzt sind, und
**dass** bei Einsatz retroreflektierender Merkmale eine oder mehrere Lichtquellen um ein jeweiliges Objektiv der Bildaufnahmeeinrichtungen (2) angeordnet sind.

9. Vorrichtung nach Anspruch 8,
**dadurch gekennzeichnet,**
**dass** die Lichtquellen Licht im für das menschliche Auge nicht sichtbaren Bereich aussenden.

10. Vorrichtung nach einem der vorhergehenden Ansprüche,
**dadurch gekennzeichnet,**
**dass** mindestens ein Radmerkmal (8) und/oder mindestens ein Karosseriemerkmal (7) und/oder mindestens ein Bezugsmerkmal (4) eine von der Bildaufnahmeeinrichtung (2) erfassbare Codierung trägt.

## Claims

1. Device for determining the wheel and/or axle geometry of motor vehicles by means of an optical measuring device having at least two image recording devices, which, from at least two different perspectives, senses a marking device including at least one wheel feature arranged on each wheel (5), and having an evaluation device, **characterized in that** the marking device (3, 4, 7, 8) also has at least one bodywork feature (7) and one reference feature arrangement (3) having at least three reference features (4), **in that** the spatial position of the reference features (4) in the evaluation device is known, **in that** the image recording devices (2) have means for sensing the marking device (3, 4, 7, 8) while the vehicle is travelling past, the at least one wheel feature (8) being capable of being sensed in at least three different rotary positions of the wheel (5) in order to determine a wheel plane, and the at least one bodywork feature (7) being capable of being simultaneously sensed in order to determine the coordinates of the vehicle, movement, and **in that** the evaluation device is designed to determine at least the wheel geometry and/or axial geometry from the relative position of the wheel plane with respect to the coordinates of the vehicle movement.

2. Device according to Claim 1, **characterized in that** the reference feature arrangement (3) has a carrier unit whose spatial arrangement can be freely configured and on which the reference features are provided in the form of reference structures or specially mounted reference features (4).

3. Device according to Claim 1 or 2, **characterized in that** the reference features (4) are arranged spatially offset with respect to the image recording position.

4. Device according to one of the preceding claims, **characterized in that** the reference features (4) and/or the wheel features (8) and/or the bodywork features (7) are designed as retroflective marks, and **in that** the image recording device is a camera (2).

5. Device according to one of the preceding claims, **characterized in that** a measuring unit (1) having at least two image recording devices (2) is provided, which is arranged at only one position in order to sense all the wheels of the vehicle jointly, or **in that** the wheel geometry and axial geometry data can initially be determined for the one side of the vehicle and then for the other side of the vehicle when the other side travels past.

6. Device according to one of Claims 1 to 4, **characterized in that**, in order to determine the wheel geometry and axle geometry, a measuring unit (1) having at least two image recording devices (2) is provided on each side of the vehicle when the vehicle travels past each side of the measuring station once.

7. Device according to one of the preceding claims, **characterized in that** a measuring unit (1) comprises at least three image recording devices.

8. Device according to one of the preceding claims, **characterized in that** one or more light sources are used to illuminate the reference features (4), the wheel features (8) and the bodywork features (7), and **in that**, when retroreflective features are used, one or more light sources are arranged about a respective lens of the image recording devices (2).

9. Device according to Claim 8, **characterized in that** the light sources emit light in the range which is invisible to the human eye.

10. Device according to one of the preceding claims, **characterized in that** at least one wheel feature (8) and/or at least one bodywork feature (7) and/or at least one reference feature (4) has a code which can be sensed by the image recording device (2).

## Revendications

1. Dispositif pour déterminer la géométrie d'une roue et/ou d'un essieu d'un véhicule automobile, à l'aide d'une installation de mesure optique comportant au moins deux installations de prise de vue qui détectent à partir d'au moins deux perspectives différentes une installation de marquage y compris au moins des repères de roue installés sur chaque roue (5), ainsi qu'une installation d'exploitation,
**caractérisé en ce que**
l'installation de marquage (3, 4, 7, 8) comporte au moins un repère de carrosserie (7) et un dispositif de repère de référence (3) avec au moins trois repères de référence (4),
la position dans l'espace des repères de référence (3) est connue dans l'installation d'exploitation,
les installations de prise de vue (2) comportent des moyens pour saisir l'installation de repère (3, 4, 7, 8) pendant le passage du véhicule, au moins un repère de roue (8) est prévu pour déterminer un plan de roue dans au moins trois positions de rotation différentes de la roue (5) et au moins un repère de carrosserie (7) en même temps pour déterminer les coordonnées de mouvement du véhicule, et
l'installation d'exploitation pour déterminer au moins la géométrie de la roue et/ou de l'essieu est formée de la position relative du plan de roue par rapport aux coordonnées de mouvement du véhicule.

2. Dispositif selon la revendication 1,
**caractérisé en ce que**
le dispositif de repère de référence (3) comporte une unité de support dont la disposition dans l'espace est conçue librement et elle porte des repères de référence sous la forme de structures de référence ou de repères de référence (4) installés spécialement.

3. Dispositif selon la revendication 1 ou 2,
**caractérisé en ce que**
les repères de référence (4) sont décalés dans l'espace par rapport à la position de prise de vue.

4. Dispositif selon l'une des revendications précédentes,
**caractérisé en ce que**
les repères de référence (4) et/ou les repères de roue (8) et/ou les repères de carrosserie (7) sont des repères rétro réfléchissants ; et
l'installation de prise de vue est une caméra (2).

5. Dispositif selon l'une des revendications précédentes,
**caractérisé par**
une installation de mesure (1) prévue avec au moins deux installations de prise de vue, pour saisir en commun toutes les roues du véhicule seulement dans une position, ou pour saisir
les données géométriques de roue et d'essieu tout d'abord pour un côté du véhicule, puis de l'autre côté du véhicule en le faisant passer l'autre côté.

6. Dispositif selon l'une des revendications 1 à 4,
**caractérisé par**
une unité de mesure (1) avec au moins deux installations de prise de vue (2) prévues sur les deux côtés de l'emplacement de mesure pour déterminer la géométrie de roue et d'essieu des deux côtés du véhicule par un passage unique du véhicule.

7. Dispositif selon l'une des revendications précédentes,
**caractérisé en ce qu'**
une installation de mesure (1) comporte au moins trois installations de prise de vue.

8. Dispositif selon l'une des revendications précédentes,
**caractérisé par**
une ou plusieurs sources lumineuses pour éclairer les repères de référence (4), les repères de roue (8) et les repères de carrosserie (7), et
dans le cas de repères rétro-réfléchissants, une ou plusieurs sources lumineuses sont installées autour de l'objectif respectif des installations de prise de vue (2).

9. Dispositif selon la revendication 8,
**caractérisé en ce que**
les sources lumineuses émettent de la lumière dans le domaine non visible pour l'oeil humain.

10. Dispositif selon l'une des revendications précédentes,
**caractérisé en ce qu'**
au moins un repère de roue (8) et/ou au moins un repère de carrosserie (7) et/ou au moins un repère de référence (4) portent un codage saisi par l'installation de prise de vue (2).
